# EUROPEAN PATENT APPLICATION

(11) **EP 2 858 434 A2**
(43) Date of publication of application: **08.04.2015**
(21) Application number: 12761350.3
(22) Date of filing: 29.05.2012
(51) Int. Cl.: H04W 68/00

(54) **METHOD, DEVICE AND SYSTEM FOR PAGING TERMINAL**

(71) Applicant: Huawei Technologies Co., Ltd., Longgang District Shenzhen, Guangdong 518129 (CN)
(72) Inventor: XI, Guobao, Shenzhen, Guangdong 518129 (CN); MI, Junwen, Shenzhen, Guangdong 518129 (CN)
(74) Representative: Goddar, Heinz J.
(86) International application number: PCT/CN2012/076224
(87) International publication number: WO 2012/126437

(57) **Abstract**

The present invention provides a method, an apparatus, and a system for paging a terminal. The method includes: obtaining, by a core network element, mobility information or service information of a terminal; determining, by the core network element, a paging range of the terminal according to the mobility information of the terminal and correspondence between the mobility information and the paging range, or determining, by the core network element, a paging range of the terminal according to the service information of the terminal and correspondence between the service information and the paging range, where the paging range includes: a single cell, a single base station, multiple cells, multiple base stations, or a location area; and paging, by the core network element, the terminal according to the paging range of the terminal. The present invention can reduce paging processing of an irrelevant cell or base station, and save network resources. The present invention is applicable to paging in a multi-layer radio network and is also applicable to paging in a single-layer radio network.

## Description

### TECHNICAL FIELD

Embodiments of the present invention relate to communications technologies, and in particular, to a method, an apparatus, and a system for paging a terminal.

### BACKGROUND

In a radio mobile network, when transmission of signaling or data is not required, for the purpose of saving radio air interface resources and saving the battery consumption of a terminal, a radio connection of the terminal is released. After the radio connection of the terminal is released, if a core network needs to send signaling or a data packet to the terminal, a core network element first sends a paging message to an access network element, and then the access network element sends the paging message to the terminal. After receiving the paging message, the terminal initiates a radio link establishment process, and after the radio link is established, the core network may send the signaling or data packet to the terminal.

Currently, paging of a core network element to a terminal is sending of a paging message in a location area in which a user is located, and a coverage range of a location area corresponding to the paging is large with many radio cells/base stations involved. For example, paging in a Universal Mobile Telecommunications System (Universal Mobile Telecommunications System, UMTS) network is performed based on a location area of a routing area in which a user is located. Hundreds or thousands of cells exist in a routing area, paging in a routing area may lead to that all cells in the routing area generate paging, which equals to hundreds or thousands times of paging. With the wide use of mobile terminals, a great deal of invalid paging exists in a network, which wastes network resources.

### SUMMARY

Embodiments of the present invention provide a method, an apparatus, and a system for paging a terminal, which are used to reduce the number of invalid paging and save air interface resources in a process of paging the terminal.

According to one aspect, an embodiment of the present invention provides a method for paging a terminal, which includes:
obtaining, by a core network element, mobility information or service information of a terminal;
determining, by the core network element, a paging range of the terminal according to the mobility information of the terminal and correspondence between the mobility information and the paging range, or determining, by the core network element, a paging range of the terminal according to the service information of the terminal and correspondence between the service information and the paging range, where the paging range includes: a single cell, a single base station, multiple cells, multiple base stations, or a location area; and
paging, by the core network element, the terminal according to the paging range of the terminal.

According to one aspect, an embodiment of the present invention further provides a core network element, which includes:
an obtaining module, configured to obtain mobility information or service information of a terminal;
a paging range determination module, configured to determine a paging range of the terminal according to the mobility information of the terminal and correspondence between the mobility information and the paging range, or determine a paging range of the terminal according to the service information of the terminal and correspondence between the service information and the paging range, where the paging range includes: a single cell, a single base station, multiple cells, multiple base stations, or a location area; and
a paging module, configured to page the terminal according to the paging range of the terminal.

According to another aspect, an embodiment of the present invention further provides a method for paging a terminal, which includes:
receiving, by an access network controller, a paging message sent by a core network element, where the paging message includes a paging range of the terminal and information of a cell last connected by the terminal, or the paging message includes information of a base station last connected by the terminal and a paging range of the terminal, where the paging range includes: a single cell, a single base station, multiple cells, or multiple base stations; and
paging, by the access network controller, the terminal according to the paging message.

According to another aspect, an embodiment of the present invention further provides an access network controller, which includes:
a receiving module, configured to receive a paging message sent by a core network element, where the paging message includes a paging range of the terminal and information of a cell last connected by the terminal, or the paging message includes information of a base station last connected by the terminal and a paging range of the terminal, where the paging range includes: a single cell, a single base station, multiple cells, or multiple base stations; and
a paging module, configured to page the terminal according to the paging message.

According to another aspect, an embodiment of the present invention further provides a base station, configured to receive a paging message sent by an access network controller or a core network element and including information of a cell last connected by a terminal, and page, according to the paging message, the terminal in the cell last connected by the terminal.

According to still another aspect, an embodiment of the present invention further provides a system for paging a terminal, which includes a base station and the foregoing core network element or includes a base station, the foregoing core network element, and the foregoing access network controller.

By using the method, apparatus, and system for paging a terminal that are provided by the embodiments of the present invention, when paging a terminal, a core network element determines a paging range of the terminal according to mobility information of the terminal and correspondence between the mobility information and the paging range, or the core network element determines a paging range of the terminal according to the mobility information and service information of the terminal and correspondence between the service information and the paging range. The terminal is paged according to the determined paging range. Because the range for paging the terminal is determined according to the mobility information or service information, paging processing of an irrelevant cell or base station can be reduced, and network resources can be saved. The embodiments of the present invention are applicable to paging in a multi-layer radio network and are also applicable to paging in a single-layer radio network.

### BRIEF DESCRIPTION OF DRAWINGS

FIG. 1A is a schematic structural diagram of a single-layer radio access network according to an embodiment of the present invention;
FIG. 1B is a schematic structural diagram of a multi-layer radio access network according to an embodiment of the present invention;
FIG 2 is a flowchart of a method for paging a terminal according to an embodiment of the present invention;
FIG 3 is a flowchart of another method for paging a terminal according to an embodiment of the present invention;
FIG 4A is a flowchart of a method for paging a terminal in a multi-layer radio access network according to an embodiment of the present invention;
FIG. 4B is a flowchart of another method for paging a terminal in a multi-layer radio access network according to an embodiment of the present invention;
FIG. 4C is a flowchart of still another method for paging a terminal in a multi-layer radio access network according to an embodiment of the present invention;
FIG. 4D is a flowchart of still another method for paging a terminal in a multi-layer radio access network according to an embodiment of the present invention;
FIG. 5A is a flowchart of a method for paging a terminal in a single-layer radio access network according to an embodiment of the present invention;
FIG. 5B is a flowchart of another method for paging a terminal in a single-layer radio access network according to an embodiment of the present invention;
FIG. 5C is a flowchart of still another method for paging a terminal in a single-layer radio access network according to an embodiment of the present invention;
FIG. 5D is a flowchart of still another method for paging a terminal in a single-layer radio access network according to an embodiment of the present invention;
FIG. 6 is a schematic structural diagram of a core network element according to an embodiment of the present invention;
FIG. 7 is a schematic structural diagram of another core network element according to an embodiment of the present invention;
FIG. 8 is a schematic structural diagram of still another core network element according to an embodiment of the present invention;
FIG. 9 is a schematic structural diagram of still another core network element according to an embodiment of the present invention;
FIG. 10 is a schematic structural diagram of an access network controller according to an embodiment of the present invention;
FIG. 11 is a schematic structural diagram of another access network controller according to an embodiment of the present invention;
FIG. 12 is a schematic structural diagram of a system for paging a terminal according to an embodiment of the present invention; and
FIG. 13 is a schematic structural diagram of another system for paging a terminal according to an embodiment of the present invention.

### DESCRIPTION OF EMBODIMENTS

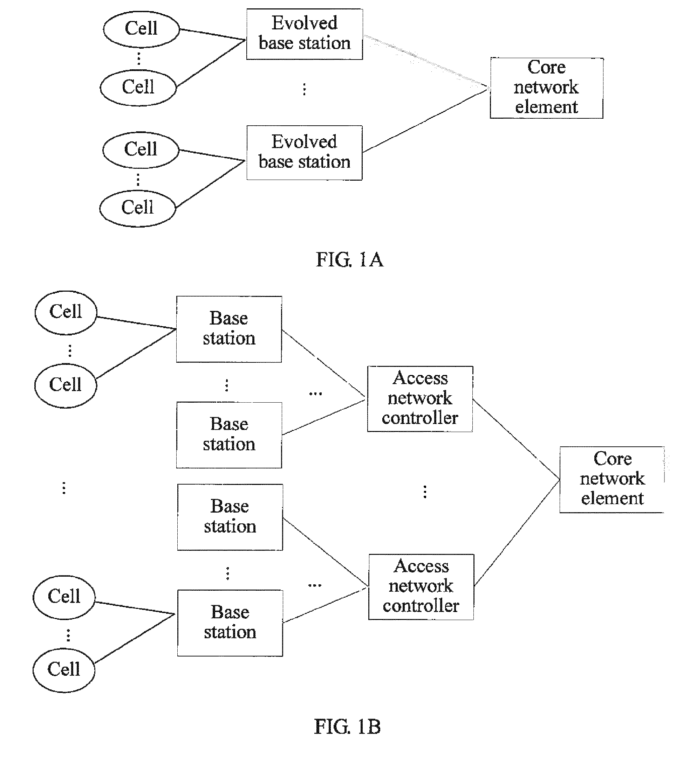

In a single-layer radio network shown in FIG. 1A, evolved base stations (Evolved Node Base, eNB) are connected to a core network element, the core network element manages multiple evolved base stations, and one evolved base station manages multiple cells. A single-layer radio access network may be an LTE network. In the single-layer radio network, the core network element pages a terminal through an evolved base station. In the LTE network, the core network element may be a mobility management entity (Mobility Management Entity, MME).

As shown in FIG. 1B, a multi-layer radio access network is an access network of two layers or more than two layers formed of base stations and access network controllers. A core network element manages multiple access network controllers, one access network controller may manage multiple base stations at the same time, and one base station may have multiple cells. The core network element pages a terminal through an access network controller and a base station. The access network controller may be a base station controller (Base Station Controller, BSC) in a 2G network, or a radio network controller (Radio Network Controller, RNC) in a 3G network; and the base station may be a base transceiver station (Base Transceiver Station, BIS) in the 2G network, or a base station (NodeB, NB) in the 3G network. In the 2G network, a BTS and a BSC form a two-layer access network; and in the 3G network, a NodeB and an RNC form a two-layer access network. In the 2G and 3G networks, the core network element may be a serving GPRS support node (Serving GPRS Support Node, SGSN).

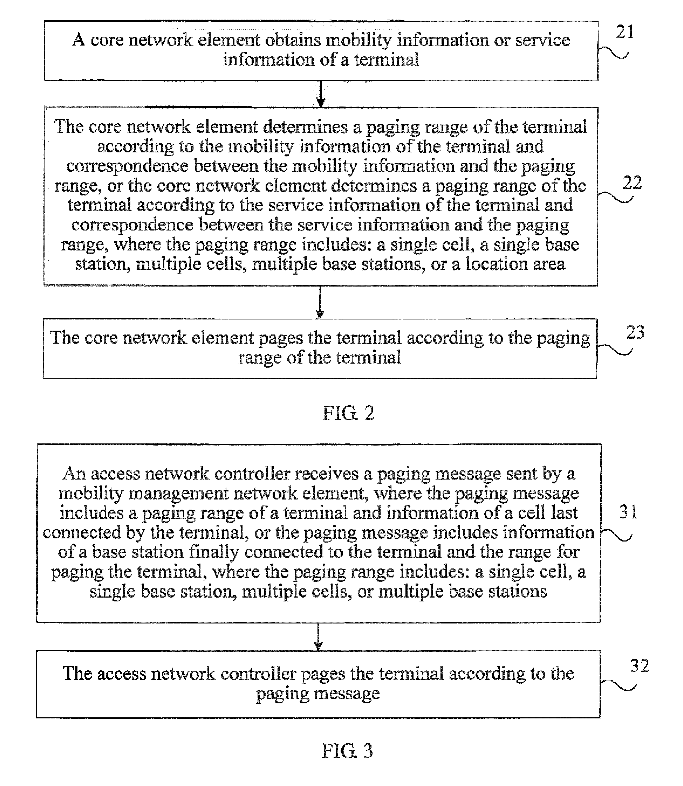

FIG 2 is a flowchart of a method for paging a terminal according to an embodiment of the present invention. The method provided in this embodiment is applicable to a multi-layer radio network and a single-layer radio network. As shown in FIG. 1, the method provided in this embodiment includes:
Step 21: A core network element obtains mobility information or service information of a terminal.

The core network element may be a core network element in a multi-layer or single-layer radio network, such as an SGSN, or may also be a core network element in a single-layer radio network, such as an MME. The mobility information is information representing the mobility of the terminal, and exemplarily, may be location information of the terminal, or may also be information such as the number of changing times of cells accessed by the terminal. The location information includes information of a cell in which the terminal is located or information of a base station in which the terminal is located. A method for obtaining the mobility information of the terminal may be receiving, by the core network element, the location information of the terminal sent by a radio access network element connected to the terminal, and storing the received location information. The method for obtaining the mobility information of the terminal may also be receiving, by the core network element when the terminal releases a radio connection to the radio access network element, the location information of the terminal sent by the radio access network element, and storing the received location information.

The service information may be information relevant to a service to be performed by the terminal, such as a service type, a service name, or a QoS value of a service of the terminal. Here, the service to be performed by the terminal is a service causing a core network to initiate the paging. Under normal circumstances, after a service is deployed for the terminal, a home subscriber server (Home Subscriber Server, HSS) at a core network side stores information relevant to the terminal and information of the service deployed for the terminal, and the core network element may obtain the service information of the terminal from the HSS. In addition, a network element such as a data gateway or a packet parsing functional entity may also perform service parsing on an interaction message of the terminal according to a preset protocol, and report parsed service information to the core network.

Step 22: The core network element determines a paging range of the terminal according to the mobility information of the terminal and correspondence between the mobility information and the paging range, or the core network element determines a paging range of the terminal according to the service information of the terminal and correspondence between the service information and the paging range, where the paging range includes: a single cell, a single base station, multiple cells, multiple base stations, or a location area.

Multiple methods for the core network element to determine the paging range exist.

Exemplarily, one of the methods is determining the paging range of the terminal according to the mobility information of the terminal and the correspondence between the mobility information and the paging range. The core network element stores the correspondence between the mobility information of the terminal and the paging range. When needing to page the terminal, the core network element searches for a paging range corresponding to the obtained mobility information of the terminal from the stored correspondence between the mobility information and the paging range.

Alternatively, the correspondence between the mobility information of the terminal and the paging range includes: correspondence between the mobility information and a mobility characteristic of the terminal and correspondence between the mobility characteristic of the terminal and the paging range. The mobility characteristic of the terminal includes: a low mobility state, a moderate mobility state, or a high mobility state. The core network element obtains the mobility characteristic of the terminal according to the mobility information of the terminal and the correspondence between the mobility information and the mobility characteristic. Then, the paging range of the terminal is determined according to the mobility characteristic of the terminal and the correspondence between the mobility characteristic and the paging range. In addition, the terminal may also directly report the mobility characteristic thereof to a mobility management network element, so that the mobility management network element does not need to determine the mobility characteristic of the terminal according to the obtained mobility information of the terminal and the stored correspondence between the mobility information and the mobility characteristic. For example, the correspondence between the mobility characteristic and the paging range includes: if the mobility characteristic is a low mobility state, the paging range is a single cell or a single base station; or if the mobility characteristic is a moderate mobility state, the paging range is multiple cells or multiple base stations; or if the mobility characteristic is a high mobility state, the paging range is a location area.

Exemplarily, another method for the core network element to determine the paging range is determining the paging range of the terminal according to the service information of the terminal and the correspondence between the service information and the paging range. The core network element may store the correspondence between the service information and the paging range, or may also obtain the correspondence between the service information and the paging range from other network elements. When needing to page the terminal, the core network element determines the paging range according to the obtained service information of the terminal and the correspondence between the service information and the paging range.

Alternatively, the correspondence between the service information and the paging range includes: correspondence between the service information and a service characteristic and correspondence between the service characteristic and the paging range, and the service characteristic includes: a time delay-sensitive service or a time delay-insensitive service. The core network element obtains a service characteristic of the terminal according to the service information of the terminal and correspondence between the service information and the service characteristic. Then, the paging range of the terminal is obtained according to the service characteristic of the terminal and correspondence between the service characteristic and the paging range. If a service of the terminal is a time delay-sensitive service, such as a voice service, the core network element determines that the paging range of the terminal is a location area in which the terminal is located.

Exemplarily, another method for the core network element to determine the paging range is determining the service characteristic of the terminal according to the service information of the terminal, and if the service characteristic of the terminal is a time delay-insensitive service, determining the paging range of the terminal according to the mobility information of the terminal and the correspondence between the mobility information and the paging range, or if the service characteristic of the terminal is a time delay-sensitive service, determining the paging range of the terminal according to the service information of the terminal and the correspondence between the service information and the paging range. If the service characteristic of the terminal is a time delay-insensitive service, such as an HTTP service, the core network element determines, according to the mobility information of the terminal and the correspondence between the mobility information and the paging range, that the paging range of the terminal is a single cell.

In the foregoing method, if the paging range is a single cell, it represents that the terminal is paged in a cell last connected by the terminal, or if the paging range is multiple cells, it represents that the terminal is paged in a cell last connected by the terminal and a neighboring cell of the cell last connected by the terminal. If the paging range is a single base station, it represents that a base station last connected by the terminal pages the terminal in all covered cells. If the paging range is multiple base stations, it represents that a base station last connected by the terminal pages the terminal in all covered cells, and a neighboring base station of the base station last connected by the terminal also pages the terminal in all covered cells. If the paging range is a location area, it represents that all base stations in the location area page the terminal in all covered cells. The cell last connected by the terminal is a cell accessed by the terminal before the terminal releases the radio connection, and correspondingly, the base station last connected by the terminal is a base station accessed by the terminal before the terminal releases the radio connection. Specifically, the base station last connected by the terminal may be a base station that reports the information of the cell in which the terminal is located or the information of the base station in which the terminal is located to the core network element when the terminal releases the radio connection to the radio access network element.

Step 23: The core network element pages the terminal according to the paging range of the terminal.

If the core network element is a core network element in a multi-layer radio network, the core network element pages the terminal to an access network controller last connected by the terminal, that is, an access network controller accessed by the terminal before the terminal releases the radio connection, and sends a paging message, and then, the access network controller sends the paging message to a base station in the paging range according to the paging message, so that the base station pages the terminal in a specific range.

If the core network element is a core network element in a single-layer radio network, the core network element sends a paging message to a base station in the paging range, so that the base station pages the terminal in a specific range.

In the method provided by the embodiment of the present invention, when paging the terminal, the core network element determines the paging range of the terminal according to the mobility information of the terminal and the correspondence between the mobility information and the paging range, or the core network element determines the paging range of the terminal according to the service information of the terminal and the correspondence between the service information and the paging range. The terminal is paged according to the determined paging range. Because the range for paging the terminal is determined according to the mobility information or service information, paging processing of an irrelevant cell or base station can be reduced, and network resources can be saved.

In the single-layer radio network, step 23 may be specifically classified into the following situations with different paging ranges determined in step 22:

1) If the paging range of the terminal is determined as a single cell, the core network element sends a paging message to the base station last connected by the terminal, where the paging message includes information of the cell last connected by the terminal and the paging range of the terminal, which is used to give an instruction for paging the terminal in the cell last connected by the terminal. The base station receiving the paging message pages, according to the paging message, the terminal in the cell last connected by the terminal.

Exemplarily, when the cell last connected by the terminal is a cell1, the base station last connected by the terminal is an eNodB1, and the core network element determines that the paging range of the terminal is a single cell, a paging message sent by the core network element to the base station eNodB1 includes information of the cell cell1 and instructs that the paging range is a single cell. After receiving the paging message, the base station eNodB1 pages the terminal in the cell cell1.

2) If the paging range of the terminal is determined as a single base station, the core network element sends a paging message to the base station last connected by the terminal, so as to page the terminal. The base station receiving the paging message pages the terminal in all managed cells according to the paging message.

Exemplarily, when the cell last connected by the terminal is a cell1, the base station last connected by the terminal is an eNodB1, and the core network element determines that the paging range of the terminal is a single base station, a paging message sent by the core network element to the base station eNodB1 includes information of the base station eNodB1 and instructs that the paging range is a single base station. After receiving the paging message, the base station eNodB1 pages the terminal in all covered cells.

3) If the paging range of the terminal is determined as multiple cells, the core network element sends a paging message to a base station to which the cell last connected by the terminal belongs and a base station to which a neighboring cell of the cell last connected by the terminal belongs, where the paging message includes information of a cell that needs to page the terminal, which is used to give an instruction for paging the terminal in the cell last connected by the terminal and the neighboring cell of the cell last connected by the terminal. The base station receiving the paging message pages, according to the instruction of the paging message, the terminal in the cell that needs to page the terminal.

Exemplarily, the cell last connected by the terminal is a cell1, the base station last connected by the terminal is an eNodB1, neighboring cells of the cell cell1 are a cell2 and a cell13, a base station in which the cell cell2 is located is an eNodeB2, and a base station in which the cell cell3 is located is an eNodeB3. When determining that the paging range of the terminal is multiple cells, the core network element sends a paging message to the cells eNodeB1, eNodeB2, and eNodeB3 separately, where the paging message sent to the eNodeB1 includes information of the cell cell1, the paging message sent to the eNodeB2 includes information of the cell cell2, and the paging message sent to the eNodeB3 includes information of the cell cell3. After receiving the paging message from the core network element, the eNodeB1 pages the terminal in the cell cell1. After receiving the paging message from the core network element, the eNodeB2 pages the terminal in the cell cell2. After receiving the paging message from the core network element, the eNodeB3 pages the terminal in the cell cell3.

4) If the paging range of the terminal is determined as multiple base stations, the core network element sends a paging message to the base station last connected by the terminal and a neighboring base station of the base station last connected by the terminal, so as to page the terminal. After receiving the paging message from the core network element, the base station last connected by the terminal and the neighboring base station of the base station last connected by the terminal page the terminal in all covered cells.

Exemplarily, the base station last connected by the terminal is an eNodB1, and neighboring base stations of the eNodB1 are an eNodB2 and an eNodB3. When determining that the paging range of the terminal are multiple base stations, the core network element sends a paging message to the base stations eNodB1, eNodB2, and eNodB3 separately. After receiving the paging message, the eNodB1 pages the terminal in all covered cells. After receiving the paging message, the eNodB2 pages the terminal in all covered cells. After receiving the paging message, the eNodB3 pages the terminal in all covered cells.

5) If the paging range of the terminal is determined as a location area, the core network element sends a paging message to all base stations in a location area to which the base station last connected by the terminal belongs, so as to page the terminal. A base station receiving the paging message sent by the core network element pages the terminal in all covered cells.

In the foregoing embodiment, the base station last connected by the terminal may be a base station that reports the information of the cell in which the terminal is located or the information of the base station in which the terminal is located to the core network element when the terminal releases the radio connection to the radio access network element.

Alternatively, in the foregoing embodiment, if the core network element determines that the paging range of the terminal is a single cell, a single base station, multiple cells, or multiple base stations, for the purpose of avoiding an impact of a failure of paging the terminal in the paging range instructed by the core network element on a service of the terminal, the paging message sent by the core network element to the base station may further include information of the location area in which the terminal is located. The information of the location area may refer to a tracking area (Tracking Area ID, TAI). When failing to page the terminal in the paging range, an evolved base station receiving the paging message may page, according to an identifier of the location area in which the terminal is located, the terminal in the location area in which the terminal is located, so as to avoid the impact caused by the failure of paging the terminal in the paging range.

In the multi-layer radio network, step 23 may be specifically classified into the following situations with different paging ranges determined in step 22:

1) If the paging range of the terminal is determined as a single cell, the core network element sends a paging message to an access network controller to which the base station last connected by the terminal belongs, where the paging message includes information of the cell last connected by the terminal and the paging range of the terminal, which is used to give an instruction for paging the terminal in the cell last connected by the terminal. The access network controller sends the information of the cell last connected by the terminal to a base station in which the cell is located, and the base station pages the terminal in the cell.

Exemplarily, when the cell last connected by the terminal is a cell1, the base station last connected by the terminal is a NodB1, and the core network element determines that the paging range of the terminal is a single cell, the core network element sends a paging message including information of the cell cell1 and instructing that the paging range is a single cell to the access network controller last connected by the terminal. After receiving the message, the access network controller determines that a base station in which the cell cell1 is located is the NodB1 and sends the paging message including the information of the cell cell1 to the NodB1. After receiving the paging message, the base station NodB1 pages the terminal in the cell cell1.

2) If the paging range of the terminal is determined as a single base station, the core network element sends a paging message to an access network controller to which the base station last connected by the terminal belongs, where the paging message includes information of the base station last connected by the terminal and the paging range of the terminal, which is used to give an instruction for paging the terminal in the base station last connected by the terminal. The access network controller sends the paging message to the base station last connected by the terminal, and instructs the base station to page the terminal in all covered cells.

Exemplarily, when the base station last connected by the terminal is a NodB1, and the core network element determines that the paging range of the terminal is a single base station, the core network element sends a paging message including information of the base station NodB1 and instructing that the paging range is a single base station to the access network controller last connected by the terminal. After receiving the message, the access network controller sends the paging message to the base station NodB1. After receiving the paging message, the base station NodB1 pages the terminal in all covered cells.

3) If the paging range of the terminal is determined as multiple cells, the core network element sends a paging message to an access network controller to which the base station last connected by the terminal belongs, where the paging message includes information of the cell last connected by the terminal and the paging range of the terminal, which is used to give an instruction for paging the terminal in the cell last connected by the terminal and a neighboring cell of the cell last connected by the terminal. After receiving the paging message, the foregoing access network controller sends the paging message to a base station in which the cell last connected by the terminal is located, so that the base station pages the terminal only in the cell. At the same time, the foregoing access network controller further determines the neighboring cell of the cell and sends the paging message to a base station in which the neighboring cell is located, so that the base station pages the terminal only in a designated cell.

Exemplarily, the cell last connected by the terminal is a cell1, the base station last connected by the terminal is a NodB1, neighboring cells of the cell cell1 are a cell2 and a cell3, a base station in which the cell cell2 is located is a NodeB2, and a base station in which the cell cell3 is located is a NodeB3. When determining that the paging range of the terminal is multiple cells, the core network element sends a paging message including information of the cell cell1 and instructing that the paging range is multiple cells to the access network controller last connected by the terminal. After receiving the paging message, the access network controller learns that the paging range is multiple cells, determines that the neighboring cells of the cell cell1 are the cell2 and cell3, and determines that base stations in which the cell1, cell2, and cell3 are located, respectively, are the NodeB1, NodeB2, and NodeB3. The access network controller sends a paging message to the base stations, NodeB1, NodeB2, and NodeB3 separately, where the paging message sent to the NodeB1 includes the information of the cell cell1, the paging message sent to the NodeB2 includes information of the cell cell2, and the paging message sent to the NodeB3 includes information of the cell cell3. The NodeB1, NodeB2, and NodeB3 page the terminal in the cells cell1, cell2, and cell3, respectively.

4) If the paging range of the terminal is determined as multiple base stations, the core network element sends a paging message to an access network controller to which the base station last connected by the terminal belongs, where the paging message includes information of the base station last connected by the terminal and the paging range of the terminal, which is used to give an instruction for paging the terminal in the base station last connected by the terminal and a neighboring base station of the base station last connected by the terminal. After receiving the paging message, the foregoing access network controller determines the neighboring base station of the base station last connected by the terminal, and sends the paging message to the base station last connected by the terminal and the neighboring base station of the base station last connected by the terminal, so that these base stations page the terminal in all covered cells.

Exemplarily, the base station last connected by the terminal is a NodB1, and neighboring base stations of the NodB1 are a NodB2 and a NodB3. When determining that the paging range of the terminal is multiple base stations, the core network element sends a paging message including information of the NodB1, NodB2, and NodB3 to the access network controller last connected by the terminal. After receiving the message, the access network controller sends a paging message to the NodB1, NodB2, and NodB3 separately. After receiving the paging message, the NodB1, NodB2, and NodB3 page the terminal in all covered cells separately.

5) If the paging range of the terminal is determined as a location area, the core network element sends a paging message to all access network controllers in a location area to which the base station last connected by the terminal belongs, where the paging message includes information of the location area to which the base station last connected by the terminal belongs and the paging range of the terminal, which is used to give an instruction for paging the terminal in the location area to which the base station last connected by the terminal belongs.

Alternatively, in the foregoing embodiment, if the core network element determines that the paging range of the terminal is a single cell, a single base station, multiple cells, or multiple base stations, for the purpose of avoiding an impact of a failure of paging the terminal in the paging range instructed by the core network element on a service of the terminal, the paging message sent by the core network element to the base station may further include information of the location area in which the terminal is located. In a 2G or 3G network, a location area identifier refers to a location area identifier (Location Area ID, LAI) in a circuit switch (Circuit Switch, CS) domain, or a routing area identifier (Routing Area ID, RAI) in a packet switch (Packet Switch, PS) domain. When failing to page the terminal in the paging range in the paging message, the access network controller may page, according to the location area in which the terminal is located, the terminal in the location area in which the terminal is located, so as to avoid the impact caused by the failure of paging the terminal in the paging range.

FIG. 3 is a flowchart of another method for paging a terminal according to an embodiment of the present invention. This embodiment is applicable to paging to a terminal in a multi-layer radio network. This embodiment mainly illustrates a paging method of an access network controller after a core network element sends a paging message to the access network controller in the embodiment corresponding to FIG. 2. As shown in FIG. 3, the method provided in this embodiment includes:

Step 31: An access network controller receives a paging message sent by a core network element, where the paging message includes a paging range of the terminal and information of a cell last connected by the terminal, or the paging message includes information of a base station last connected by the terminal and a paging range of the terminal, where the paging range includes: a single cell, a single base station, multiple cells, or multiple base stations.

Step 32: The access network controller pages the terminal according to the paging message.

If the paging range of the terminal in the paging message sent by the core network element is a single cell, the paging message sent by the core network element includes the information of the cell last connected by the terminal, which is used to give an instruction for paging the terminal in the cell last connected by the terminal. In this case, step 32 may specifically be that, the access network controller determines a base station in which the cell last connected by the terminal is located, and sends paging message to the base station in which the cell last connected by the terminal is located to instruct the base station to page the terminal in the cell last connected by the terminal. Here, the access network controller is an access network controller to which the base station last connected by the terminal belongs.

If the paging range of the terminal in the paging message sent by the core network element is a single base station, the paging message sent by the core network element includes the information of the base station last connected by the terminal, which is used to give an instruction for paging the terminal in the base station last connected by the terminal. In this case, step 32 may be specifically be that, the access network controller sends the paging message to the base station last connected by the terminal to instruct the base station to page the terminal in all cells of the base station. The access network controller is an access network controller to which the base station last connected by the terminal belongs.

If the paging range of the terminal in the paging message sent by the core network element is multiple cells, the paging message sent by the core network element includes the information of the cell last connected by the terminal, which is used to give an instruction for paging the terminal in the cell last connected by the terminal and a neighboring cell of the cell last connected by the terminal. In this case, step 32 may specifically be that, the access network controller determines the base station in which the cell last connected by the terminal is located and a base station in which the neighboring cell of the cell last connected by the terminal is located, then sends the paging message to the base station in which the cell last connected by the terminal is located to give an instruction for paging the terminal in the cell last connected by the terminal, and sends the paging message to the base station in which the neighboring cell of the cell last connected by the terminal is located to give an instruction for paging the terminal in the neighboring cell of the cell last connected by the terminal. The foregoing access network controller is an access network controller to which the base station last connected by the terminal belongs.

If the paging range of the terminal in the paging message sent by the core network element is multiple base stations, the paging message sent by the core network element includes the information of the base station last connected by the terminal, which is used to give an instruction for paging the terminal in the base station last connected by the terminal and a neighboring base station of the base station last connected by the terminal. In this case, step 32 may specifically be that, the access network controller determines the neighboring base station of the base station last connected by the terminal, and sends the paging message to the base station and the neighboring base station separately to instruct the base station and the neighboring base station to page the terminal. The foregoing access network controller is an access network controller to which the base station last connected by the terminal belongs.

If the paging range of the terminal is a location area, the paging message includes information of a location area to which the base station last connected by the terminal belongs and the paging range of the terminal, which is used to give an instruction for paging the terminal in the location area to which the base station last connected by the terminal belongs. When the paging range of the terminal is a location area, step 32 may specifically be that, the access network controller sends the paging message to all connected base stations to instruct all the base stations connected to the access network controller to page the terminal. The foregoing access network controller is an access network controller of the location area to which the base station last connected by the terminal belongs.

Further, when the terminal releases a radio connection, the access network controller sends information of a cell in which the terminal is located or information of a base station in which the terminal is located to the core network element. For example, the information of the cell in which the terminal is located or the information of the base station in which the terminal is located is carried in a radio connection release message.

In the method for paging a terminal according to the embodiment of the present invention, the access network controller determines, according to the paging message, the base station paging the terminal, and sends the paging message to the determined base station to instruct the determined base station to page the terminal in the paging range. The access network controller only pages a base station in the paging range instructed by the core network element. Therefore, the cooperation between the core network element and the access network controller reduces a range of cells or base stations involved in the paging, which avoids invalid paging processing of other irrelevant cells or base stations, saves air interface paging resources of the base station, reduces paging processing of an irrelevant cell or base station to a great extent, and lowers paging load of the base station.

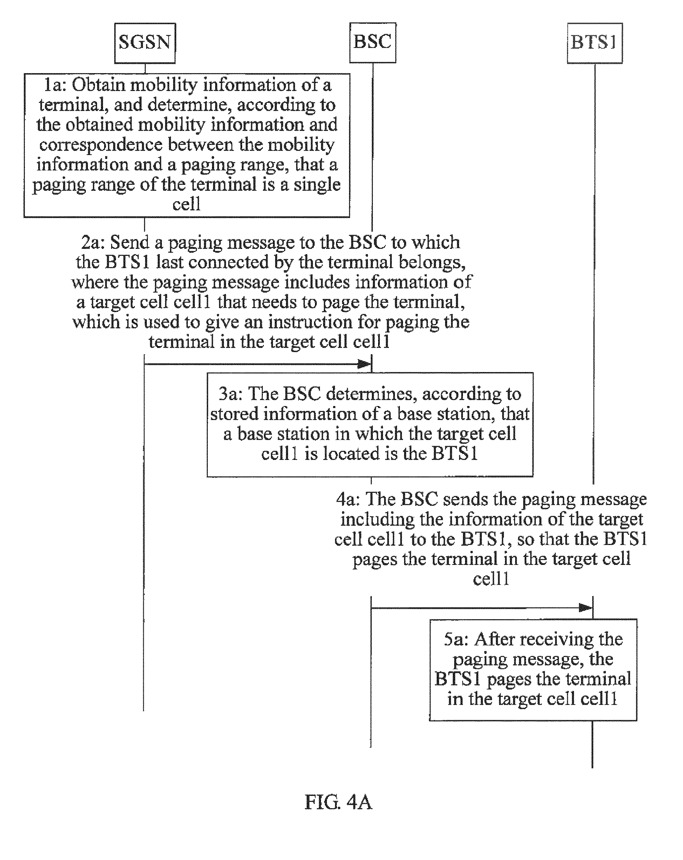

Embodiments corresponding to FIG 4A to FIG. 4D illustrate a method for paging a terminal in a multi-layer radio access network.

FIG. 4A is a flowchart of a method for paging a terminal in a multi-layer radio access network according to an embodiment of the present invention. In this embodiment, a method for paging a terminal in a 2G network is taken as an example for illustration, and a method for paging a terminal in a 3G network is similar to that in the 2G network. The difference lies in that, an access network controller and a base station entity in the 3G network are not the same as that in the 2G network. In this embodiment, an SGSN determines that a paging range is a single cell. As shown in FIG. 4A, the method provided in this embodiment includes:
Step 1a: An SGSN obtains mobility information of a terminal, and determines, according to the obtained mobility information and correspondence between the mobility information and a paging range, that a paging range of the terminal is a single cell.
Step 2a: The SGSN sends a paging message to a BSC to which a BTS1 last connected by the terminal belongs, where the paging message includes information of a target cell celll that needs to page the terminal, which is used to give an instruction for paging the terminal in the target cell cell1. The target cell cell1 is a cell last connected by the terminal.
Step 3a: The BSC determines, according to stored information of a base station, that a base station in which the target cell cell1 is located is the BTS1.
Step 4a: The BSC sends the paging message including the information of the target cell cell1 to the BTS1, so that the BTS1 pages the terminal in the target cell cell1.
Step 5a: After receiving the paging message, the BTS1 pages the terminal in the target cell cell1.

In the embodiment of the present invention, the paging message may be a Paging message.

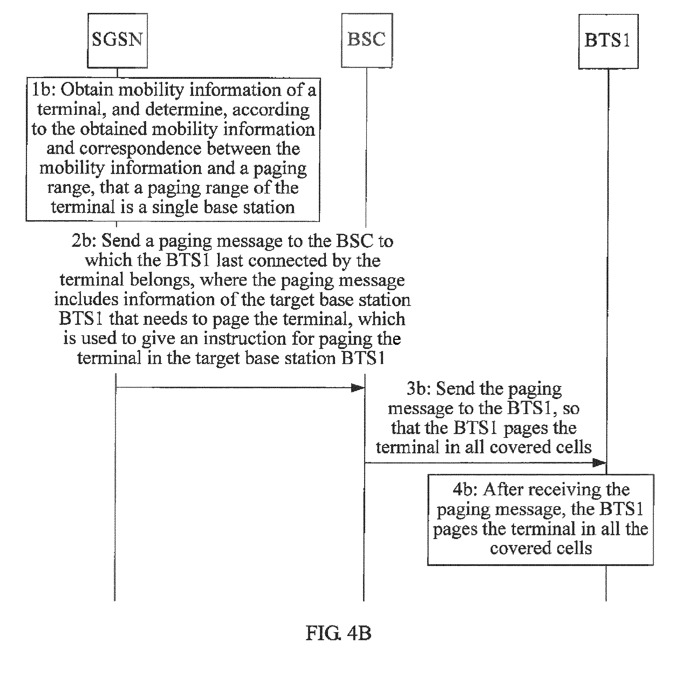

FIG. 4B is a flowchart of another method for paging a terminal in a multi-layer radio access network according to an embodiment of the present invention. In this embodiment, a method for paging a terminal in a 2G network is taken as an example for illustration, and a method for paging a terminal in a 3G network is similar to that in the 2G network. The difference lies in that, an access network controller and a base station entity in the 3G network are not the same as that in the 2G network. In this embodiment, an SGSN determines that a paging range is a single base station. As shown in FIG. 4B, the method provided in this embodiment includes:
Step 1b: An SGSN obtains mobility information of a terminal, and determines, according to the obtained mobility information and correspondence between the mobility information and a paging range, that a paging range of the terminal is a single base station.
Step 2b: The SGSN sends a paging message to a BSC to which a BTS1 last connected by the terminal belongs, where the paging message includes information of the target base station BTS1 that needs to page the terminal, which is used to give an instruction for paging the terminal in the target base station BTS1.
Step 3b: The BSC sends the paging message to the BTS1, so that the BTS1 pages the terminal in all covered cells.
Step 4b: After receiving the paging message, the BTS1 pages the terminal in all the covered cells.

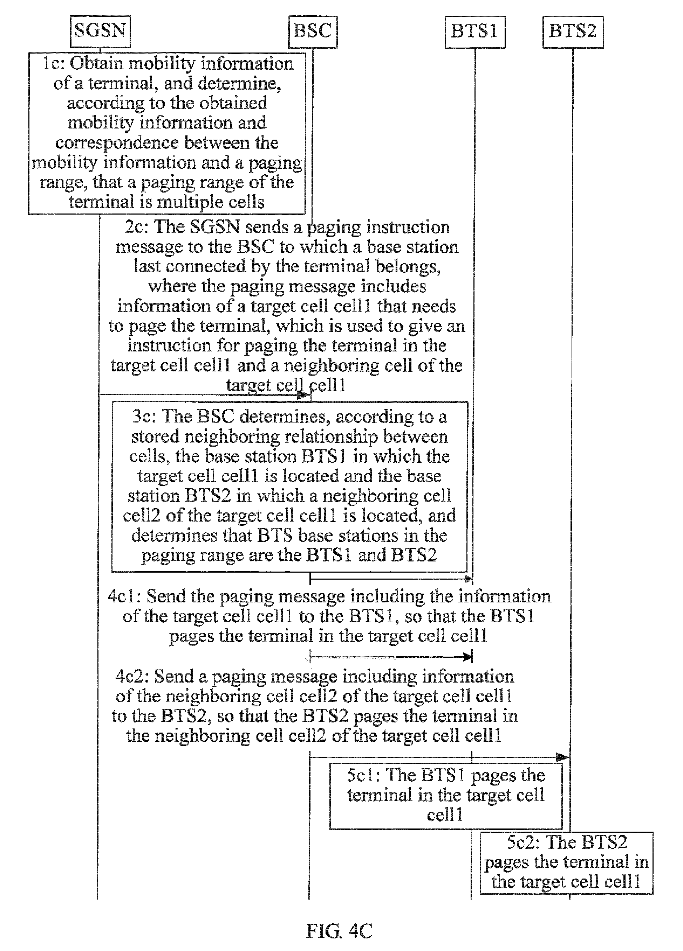

FIG 4C is a flowchart of still another method for paging a terminal in a multi-layer radio access network according to an embodiment of the present invention. In this embodiment, a 2G network is taken as an example for illustration, and a paging method in a 3G network is similar to a paging method in the 2G network. The difference lies in that, an access network controller and a base station entity in the 3G network are not the same as that in the 2G network. In this embodiment, an SGSN determines that a paging range is multiple cells. As shown in FIG. 4C, the method provided in this embodiment includes:
Step 1c: An SGSN obtains mobility information of a terminal, and determines, according to the obtained mobility information and correspondence between the mobility information and a paging range, that a paging range of the terminal is multiple cells.
Step 2c: The SGSN sends a paging message to a BSC to which a base station last connected by the terminal belongs, where the paging message includes information of a target cell cell1 that needs to page the terminal, which is used to give an instruction for paging the terminal in the target cell cell1 and a neighboring cell of the target cell cell1.

The target cell is a cell last connected by the terminal, that is, a cell in which the terminal is located and that is reported by the BSC to the SGSN before the terminal releases a radio connection.

Step 3c: The BSC determines, according to a stored neighboring relationship between cells, a base station BTS1 in which the target cell cell1 is located and a base station BTS2 in which a neighboring cell cell2 of the target cell cell1 is located, and determines that base stations in the paging range are the BTS1 and the BTS2.

Step 4c1: The BSC sends the paging message including the information of the target cell cell1 to the BTS1, so that the BTS1 pages the terminal in the target cell cell1.

Step 4c2: The BSC sends a paging message including information of the neighboring cell cell2 of the target cell cell1 to the BTS2, so that the BTS2 pages the terminal in the neighboring cell cell2 of the target cell cell1.

Step 5c1: The BTS1 pages the terminal in the target cell cell1.

Step 5c2: The BTS2 pages the terminal in the target cell cell2.

In this embodiment, a range of cells or base stations involved in the paging is reduced through the cooperation of the SGSN, BSC, and the base station, which avoids invalid processing of other irrelevant cells or base stations on the paging, and reduces paging processing of a cell or base station and the consumption of air interface paging resources to a great extent.

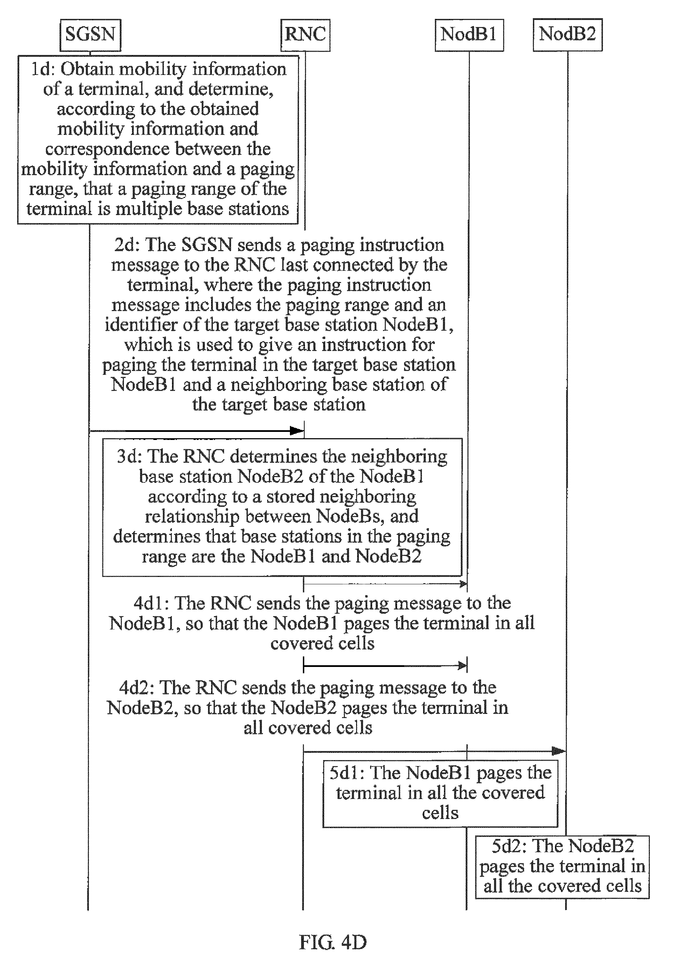

FIG. 4D is a flowchart of still another method for paging a terminal in a multi-layer radio access network according to an embodiment of the present invention. In this embodiment, a 3G network is taken as an example for illustration, and a paging method in a 2G network is the same as a paging method in the 3G network. The difference lies in that, an access network controller and a base station entity in the 2G network are not the same as that in the 3G network. As shown in FIG. 4D, the method provided in this embodiment includes:
Step 1d: An SGSN obtains mobility information of a terminal, and determines, according to the obtained mobility information and correspondence between the mobility information and a paging range, that a paging range of the terminal is multiple base stations.
Step 2d: The SGSN sends a paging message to an RNC last connected by the terminal, where the paging message includes an identifier of a target base station NodeB1, which is used to give an instruction for paging the terminal in the target base station NodeB 1 and a neighboring base station of the target base station.

The NodeB1 is a base station last connected by the terminal, that is, a base station to which the terminal belongs and that is reported by the RNC to the SGSN before the terminal releases a radio connection.

Step 3d: The RNC determines a neighboring base station NodeB2 of the NodeB1 according to a stored neighboring relationship between NodeBs, and determines that base stations in the paging range are the NodeB1 and NodeB2.

Step 4d1: The RNC sends the paging message to the NodeB1, so that the NodeB1 pages the terminal in all covered cells.

Step 4d2: The RNC sends the paging message to the NodeB2, so that the NodeB2 pages the terminal in all covered cells.

Step 5d1: The NodeB1 pages the terminal in all the covered cells.

Step 5d2: The NodeB2 pages the terminal in all the covered cells.

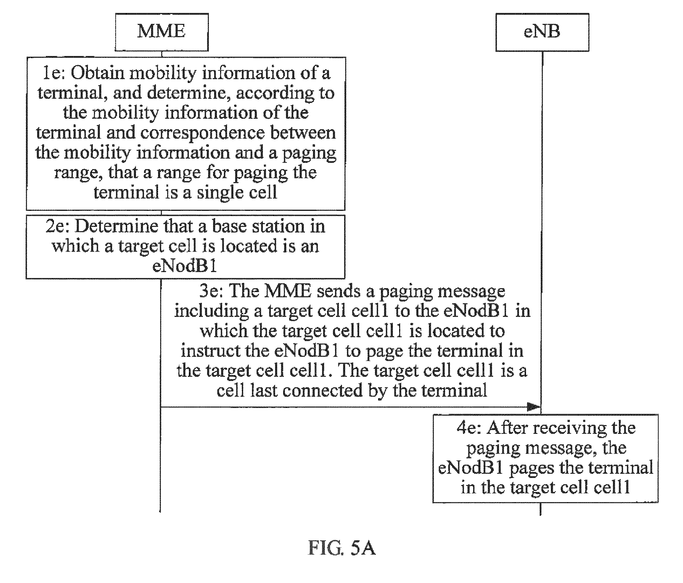

An LTE network is taken as an example in embodiments corresponding to FIG 5A to FIG. 5D to illustrate a method for paging a terminal in a single-layer radio access network.

FIG. 5A is a flowchart of a method for paging a terminal in a single-layer radio network according to an embodiment of the present invention. As shown in FIG. 5A, the method provided in this embodiment includes:
Step 1e: An MME obtains mobility information of a terminal, and determines, according to the mobility information of the terminal and correspondence between the mobility information and a paging range, that a range for paging the terminal is a single cell.
Step 2e: The MME determines that a base station in which a target cell is located is an eNodB1.
Step 3e: The MME sends a paging message including a target cell cell1 to the eNodB1 in which the target cell cell1 is located to instruct the eNodB1 to page the terminal in the target cell cell1. The target cell cell1 is a cell last connected by the terminal.
Step 4e: After receiving the paging message, the eNodB1 pages the terminal in the target cell cell1.

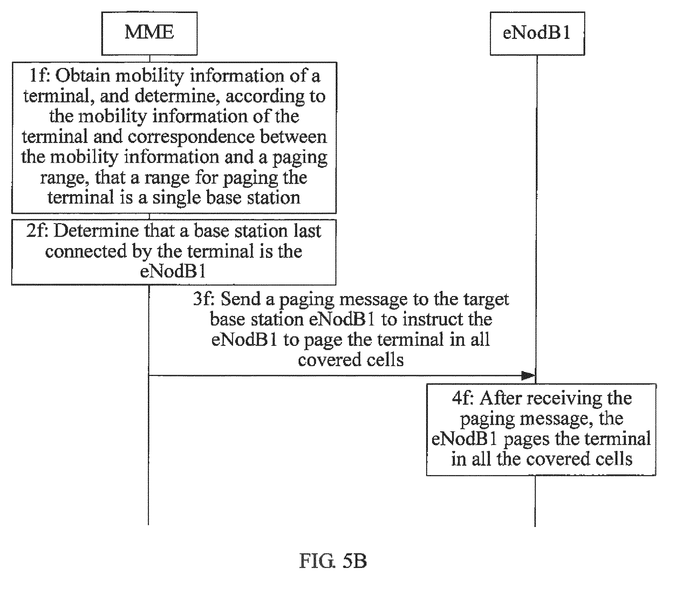

FIG. 5B is a flowchart of another method for paging a terminal in a single-layer radio network according to an embodiment of the present invention. As shown in FIG. 5B, the method provided in this embodiment includes:
Step 1f: An MME obtains mobility information of a terminal, and determines, according to the mobility information of the terminal and correspondence between the mobility information and a paging range, that a range for paging the terminal is a single base station.
Step 2f: The MME determines that a base station last connected by the terminal is an eNodB1.
Step 3f: The MME sends a paging message to the target base station eNodB1 to instruct the eNodB1 to page the terminal in all covered cells.
Step 4f: After receiving the paging message, the eNodB1 pages the terminal in all the covered cells.

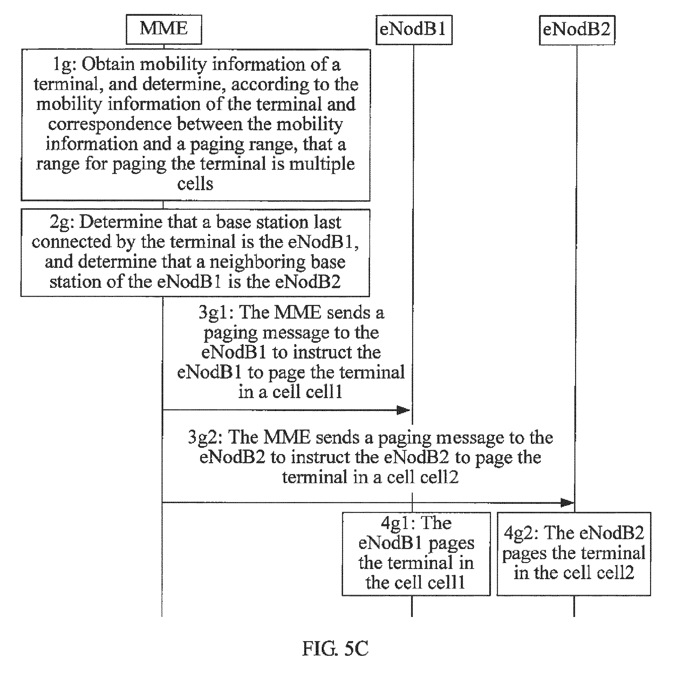

FIG. 5C is a flowchart of still another method for paging a terminal in a single-layer radio network according to an embodiment of the present invention. As shown in FIG 5C, the method provided in this embodiment includes:
Step 1g: An MME obtains mobility information of a terminal, and determines, according to the mobility information of the terminal and correspondence between the mobility information and a paging range, that a range for paging the terminal is multiple cells.
Step 2g: The MME determines that a base station in which a cell cell1 last connected by the terminal is located is an eNodB1, and determines that a base station in which a neighboring cell cell2 of the cell cell1 is located is an eNodB2.
Step 3g1: The MME sends a paging message including information of the cell cell1 to the eNodB1 to instruct the eNodB1 to page the terminal in the cell cell1.
Step 3g2: The MME sends a paging message including information of the cell cell2 to the eNodB2 to instruct the eNodB2 to page the terminal in the cell cell2.
Step 4g1: The eNodB1 pages the terminal in the cell cell1.
Step 4g2: The eNodB2 pages the terminal in the cell cell2.

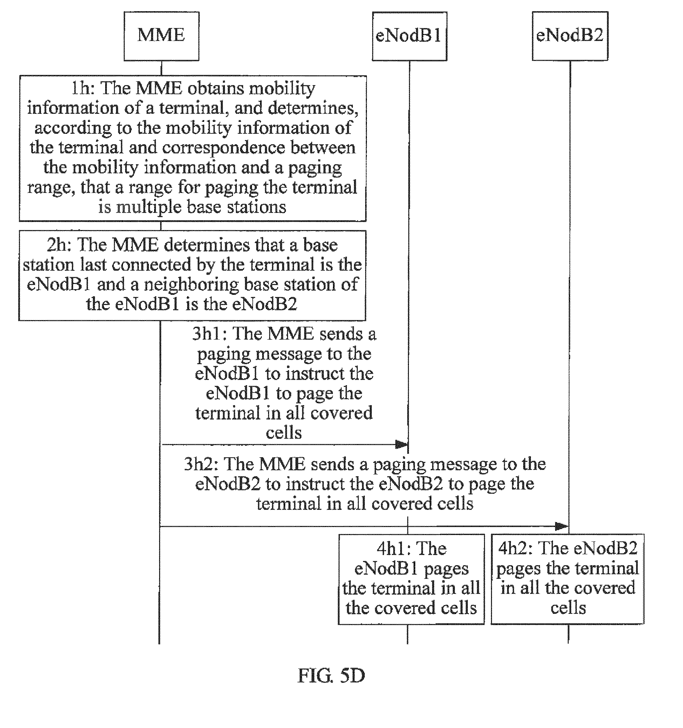

FIG. 5D is a flowchart of still another method for paging a terminal in a single-layer radio network according to an embodiment of the present invention. As shown in FIG 5D, the method provided in this embodiment includes:
Step 1h: An MME obtains mobility information of a terminal, and determines, according to the mobility information of the terminal and correspondence between the mobility information and a paging range, that a range for paging the terminal is multiple base stations.
Step 2h: The MME determines that a base station last connected by the terminal is an eNodB1 and a neighboring base station of the eNodB1 is an eNodB2.
Step 3h1: The MME sends a paging message to the eNodB1 to instruct the eNodB1 to page the terminal in all covered cells.
Step 3h2: The MME sends a paging message to the eNodB2 to instruct the eNodB2 to page the terminal in all covered cells.
Step 4h1: After receiving the paging message, the eNodB1 pages the terminal in all the covered cells.
Step 4h2: After receiving the paging message, the eNodB2 pages the terminal in all the covered cells.

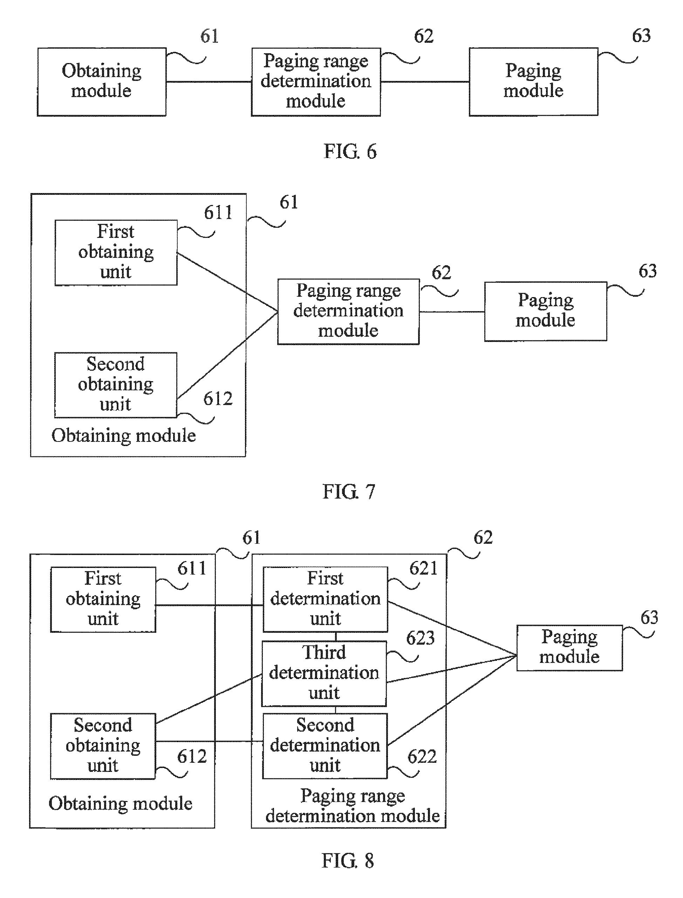

FIG 6 is a schematic structural diagram of a core network element according to an embodiment of the present invention. As shown in FIG. 6, the network element provided in this embodiment includes: an obtaining module 61, a paging range determination module 62, and a paging module 63.

The obtaining module 61 is configured to obtain mobility information or service information of a terminal. The mobility information may be location information of the terminal, or may also be information such as the number of changing times of cells accessed by the terminal. The location information includes information of a cell in which the terminal is located or information of a base station in which the terminal is located. The service information may be a service type, a service name, or a QoS value of a service of the terminal.

The paging range determination module 62 is configured to determine a paging range of the terminal according to the mobility information of the terminal and correspondence between the mobility information and the paging range, or determine a paging range of the terminal according to the service information of the terminal and correspondence between the service information and the paging range, where the paging range includes: a single cell, a single base station, multiple cells, multiple base stations, or a location area.

The paging module 63 is configured to page the terminal according to the paging range of the terminal.

Preferably, as shown in FIG. 7, the obtaining module 61 includes: a first obtaining unit 611 and a second obtaining unit 612.

The first obtaining unit 611 is configured to receive location information of the terminal sent by a radio access network element connected to the terminal, or when the terminal releases a radio connection to a radio access network element, receive location information of the terminal sent by the radio access network element, where the location information includes information of a cell in which the terminal is located or information of a base station in which the terminal is located; and store the received location information.

The second obtaining unit 612 is configured to obtain the service information of the terminal.

For a specific function of the foregoing each module, reference may be made to the description in the embodiment corresponding to FIG. 1, which is not elaborated herein again.

When paging the terminal, the core network element provided by the embodiment of the present invention determines the paging range of the terminal according to the mobility information of the terminal and the correspondence between the mobility information and the paging range, or the core network element determines the paging range of the terminal according to the service information of the terminal and the correspondence between the service information and the paging range. The terminal is paged according to the determined paging range. Because the range for paging the terminal is determined according to the mobility information or service information, paging processing of an irrelevant cell or base station can be reduced, and network resources can be saved.

As shown in FIG. 8, based on FIG. 7, the paging range determination module 62 includes: a first determination unit 621, a second determination unit 622, and a third determination unit 623.

The first determination unit 621 is configured to determine the paging range of the terminal according to the mobility information of the terminal and the correspondence between the mobility information and the paging range, where the paging range includes: a single cell, a single base station, multiple cells, multiple base stations, or a location area.

Further, the first determination unit 621 is specifically configured to obtain a mobility characteristic of the terminal according to the mobility information of the terminal and correspondence between the mobility information and the mobility characteristic; and obtain the paging range of the terminal according to the mobility characteristic of the terminal and correspondence between the mobility characteristic and the paging range, where the correspondence between the mobility information and the paging range includes the correspondence between the mobility information and the mobility characteristic and the correspondence between the mobility characteristic and the paging range, and the mobility characteristic includes: a low mobility state, a moderate mobility state, or a high mobility state. Preferably, the correspondence between the mobility characteristic and the paging range includes: if the mobility characteristic is a low mobility state, the paging range is a single cell or a single base station; or if the mobility characteristic is a moderate mobility state, the paging range is multiple cells or multiple base stations; or if the mobility characteristic is a high mobility state, the paging range is a location area.

The second determination unit 622 is configured to determine the paging range of the terminal according to the mobility information and the service information of the terminal and the correspondence between the service information and the paging range.

Further, the second determination unit 622 is specifically configured to obtain a service characteristic of the terminal according to the service information of the terminal and correspondence between the service information and the service characteristic; and obtain the paging range of the terminal according to the service characteristic of the terminal and correspondence between the service characteristic and the paging range. The correspondence between the service information and the paging range includes: the correspondence between the service information and the service characteristic and the correspondence between the service characteristic and the paging range, and the service characteristic includes: a time delay-sensitive service or a time delay-insensitive service. Preferably, the correspondence between the service characteristic and the paging range includes: if the service characteristic is a time delay-sensitive service, the paging range is a location area.

The third determination unit 623 is configured to determine, according to the service information of the terminal, whether a service characteristic corresponding to the service information is a time delay-insensitive service, if yes, determine the paging range of the terminal through the second determination unit, otherwise, determine the paging range of the terminal through the second determination unit.

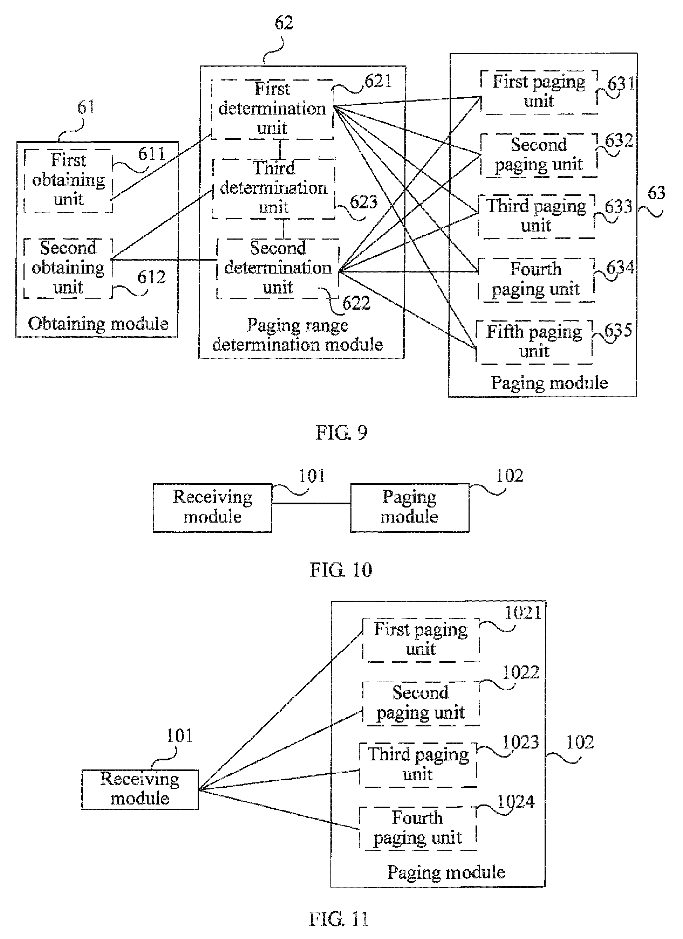

As shown in FIG. 9, based on FIG. 6, FIG. 7, and FIG. 8, the paging module 63 includes one or more of the following modules: a first paging unit 631, a second paging unit 632, a third paging unit 633, a fourth paging unit 634, and a fifth paging unit 635.

The first paging unit 631 is configured to: if the paging range of the terminal is a single cell, send a paging message to a base station last connected by the terminal, where the paging message includes information of a cell last connected by the terminal and the paging range of the terminal, which is used to give an instruction for paging the terminal in the cell last connected by the terminal, or send a paging message to an access network controller to which a base station last connected by the terminal belongs, where the paging message includes information of a cell last connected by the terminal and the paging range of the terminal, which is used to give an instruction for paging the terminal in the cell last connected by the terminal.

The second paging unit 632 is configured to: if the paging range of the terminal is a single base station, send a paging message to a base station last connected by the terminal, so as to page the terminal, or send a paging message to an access network controller to which a base station last connected by the terminal belongs, where the paging message includes information of the base station last connected by the terminal and the paging range of the terminal, which is used to give an instruction for paging the terminal in the base station last connected by the terminal.

The third paging unit 633 is configured to: if the paging range of the terminal is multiple cells, send a paging message to a base station to which a cell last connected by the terminal belongs and a base station to which a neighboring cell of the cell last connected by the terminal belongs, where the paging message includes information of a cell that needs to page the terminal, which is used to give an instruction for paging the terminal in the cell last connected by the terminal and the neighboring cell of the cell last connected by the terminal, or send a paging message to an access network controller to which a base station last connected by the terminal belongs, where the paging message includes information of a cell last connected by the terminal and the paging range of the terminal, which is used to give an instruction for paging the terminal in the cell last connected by the terminal and a neighboring cell of the cell last connected by the terminal.

The fourth paging unit 634 is configured to: if the paging range of the terminal is multiple base stations, send a paging message to a base station last connected by the terminal and a neighboring base station of the base station last connected by the terminal, so as to page the terminal, or send a paging message to an access network controller to which a base station last connected by the terminal belongs, where the paging message includes information of the base station last connected by the terminal and the paging range of the terminal, which is used to give an instruction for paging the terminal in the base station last connected by the terminal and a neighboring base station of the base station last connected by the terminal.

The fifth paging unit 635 is configured to: if the paging range of the terminal is a location area, send a paging message to all base stations in a location area to which a base station last connected by the terminal belongs, so as to page the terminal, or send a paging message to all access network controllers in a location area to which a base station last connected by the terminal belongs, where the paging message includes information of the location area to which the base station last connected by the terminal belongs and the paging range of the terminal, which is used to give an instruction for paging the terminal in the location area to which the base station last connected by the terminal belongs.

FIG. 10 is a schematic structural diagram of an access network controller according to an embodiment of the present invention. As shown in FIG 10, the access network controller provided in this embodiment includes: a receiving module 101 and a paging module 102.

The receiving module 101 is configured to receive a paging message sent by a core network element, where the paging message includes a paging range of the terminal and information of a cell last connected by the terminal, or the paging message includes information of a base station last connected by the terminal and a paging range of the terminal, where the paging range includes: a single cell, a single base station, multiple cells, or multiple base stations.

The paging module 102 is configured to page the terminal according to the paging message.

As shown in FIG. 11, the paging module 102 includes: a first paging unit 1021, a second paging unit 1022, a third paging unit 1023, and a fourth paging unit 1024.

The first paging unit 1021 is configured to: if the paging range of the terminal in the paging message sent by the core network element is a single cell, determine a base station in which the cell last connected by the terminal in the paging message sent by the core network element is located, and send paging information to the base station in which the cell last connected by the terminal is located to instruct the base station to page the terminal in the cell last connected by the terminal.

The second paging unit 1022 is configured to: if the paging range of the terminal in the paging message sent by the core network element is a single base station, send the paging message to the base station last connected by the terminal in the paging message sent by the core network element to instruct the base station to page the terminal in all cells of the base station.

The third paging unit 1023 is configured to: if the paging range of the terminal in the paging message sent by the core network element is multiple cells, determine a base station in which the cell last connected by the terminal in the paging message sent by the core network element is located and a base station in which a neighboring cell of the cell last connected by the terminal is located, send the paging message to the base station in which the cell last connected by the terminal is located to give an instruction for paging the terminal in the cell last connected by the terminal, and send the paging message to the base station in which the neighboring cell of the cell last connected by the terminal is located to give an instruction for paging the terminal in the neighboring cell of the cell last connected by the terminal.

The fourth paging unit 1024 is configured to: if the paging range of the terminal in the paging message sent by the core network element is multiple base stations, determine a neighboring base station of the base station last connected by the terminal in the paging message sent by the core network element, send the paging message to the base station last connected by the terminal to instruct the base station last connected by the terminal to page the terminal, and send the paging message to the neighboring base station to instruct the neighboring base station to page the terminal.

For a specific function of the foregoing each module, reference may be made to the description in the embodiment corresponding to FIG. 3, which is not elaborated herein again.

An embodiment of the present invention further provides a base station. The base station is configured to receive a paging message sent by an access network controller or a core network element and including information of a cell last connected by a terminal, and page, according to the paging message, the terminal in the cell last connected by the terminal.

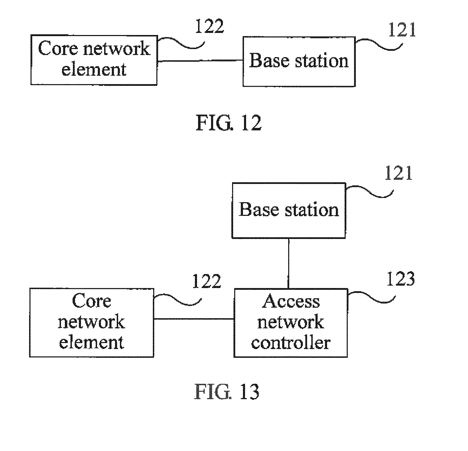

FIG. 12 is a schematic structural diagram of a system for paging a terminal according to an embodiment of the present invention. As shown in FIG. 12, a base station 121 and a core network element 122 are included. For the core network element 122, reference is made to the descriptions in the embodiments corresponding to FIG. 6 to FIG. 9, which is not elaborated herein again.

FIG. 13 is a schematic structural diagram of another system for paging a terminal according to an embodiment of the present invention. As shown in FIG. 12, a base station 121, a core network element 122, and an access network controller 123 are included. For the core network element 122, reference is made to the descriptions in the embodiments corresponding to FIG. 6 to FIG. 9, and for the access network controller 123, reference may be made to the descriptions in the embodiments corresponding to FIG. 10 to FIG. 11, which are not elaborated herein again.

Persons of ordinary skill in the art may understand that, all or a part of the steps in the foregoing method embodiments may be implemented by a program instructing relevant hardware. The foregoing program may be stored in a computer-readable storage medium. When the program is run, the foregoing steps in the method embodiments are performed. The foregoing storage medium may be any medium capable of storing program codes, such as a ROM, a RAM, a magnetic disk, or an optical disk.

Finally, it should be noted that, the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments, or make equivalent replacements to some or all the technical features thereof, as long as these modifications or replacements do not make the essence of corresponding technical solutions depart from scope of the technical solutions in the embodiments of the present invention.

## Claims

1. A method for paging a terminal, comprising:
Obtaining, by a core network element, mobility information or service information of a terminal;
Determining, by the core network element, a paging range of the terminal according to the mobility information of the terminal and correspondence between the mobility information and the paging range, or determining, by the core network element, a paging range of the terminal according to the service information of the terminal and correspondence between the service information and the paging range, wherein the paging range comprises: a single cell, a single base station, multiple cells, multiple base stations, or a location area; and
Paging, by the core network element, the terminal according to the paging range of the terminal.

2. The method according to claim 1, wherein the obtaining, by the core network element, the mobility information of the terminal comprises:
receiving, by the core network element, location information of the terminal sent by a radio access network element connected to the terminal, or when the terminal releases a radio connection to a radio access network element, receiving, by the core network element, location information of the terminal sent by the radio access network element, wherein the location information comprises information of a cell in which the terminal is located or information of a base station in which the terminal is located; and
storing, by the core network element, the received location information.

3. The method according to claim 1 or 2, wherein
the correspondence between the mobility information and the paging range comprises: correspondence between the mobility information and a mobility characteristic and correspondence between the mobility characteristic and the paging range, and the mobility characteristic comprises: a low mobility state, a moderate mobility state, or a high mobility state; and
the determining, by the core network element, the paging range of the terminal according to the mobility information of the terminal and the correspondence between the mobility information and the paging range comprises:
obtaining, by the core network element, the mobility characteristic of the terminal according to the mobility information of the terminal and the correspondence between the mobility information and the mobility characteristic; and
obtaining, by the core network element, the paging range of the terminal according to the mobility characteristic of the terminal and the correspondence between the mobility characteristic and the paging range.

4. The method according to claim 3, wherein the correspondence between the mobility characteristic and the paging range comprises:
if the mobility characteristic is a low mobility state, the paging range is a single cell or a single base station; or
if the mobility characteristic is a moderate mobility state, the paging range is multiple cells or multiple base stations; or
if the mobility characteristic is a high mobility state, the paging range is a location area.

5. The method according to claim 3 or 4, before the determining, by the core network element, the paging range of the terminal according to the mobility information of the terminal and the correspondence between the mobility information and the paging range, further comprising:
determining, by the core network element, according to the service information of the terminal, that a service characteristic corresponding to the service information is a time delay-insensitive service.

6. The method according to claim 1 or 2, wherein
the correspondence between the service information and the paging range comprises: correspondence between the service information and a service characteristic and correspondence between the service characteristic and the paging range, and the service characteristic comprises: a time delay-sensitive service or a time delay-insensitive service; and
the determining, by the core network element, the paging range of the terminal according to the service information of the terminal and the correspondence between the service information and the paging range comprises:
obtaining, by the core network element, the service characteristic of the terminal according to the service information of the terminal and the correspondence between the service information and the service characteristic; and
obtaining, by the core network element, the paging range of the terminal according to the service characteristic of the terminal and the correspondence between the service characteristic and the paging range.

7. The method according to claim 6, wherein the correspondence between the service characteristic and the paging range comprises: if the service characteristic is a time delay-sensitive service, the paging range is a location area.

8. The method according to any one of claims 1 to 7, wherein the paging, by the core network element, the terminal according to the paging range of the terminal comprises:
if the paging range of the terminal is a single cell, sending, by the core network element, a paging message to a base station last connected by the terminal, wherein the paging message comprises information of a cell last connected by the terminal and the paging range of the terminal, which is used to give an instruction for paging the terminal in the cell last connected by the terminal, or sending, by the core network element, a paging message to an access network controller to which a base station last connected by the terminal belongs, wherein the paging message comprises information of a cell last connected by the terminal and the paging range of the terminal, which is used to give an instruction for paging the terminal in the cell last connected by the terminal; or
if the paging range of the terminal is a single base station, sending, by the core network element, a paging message to a base station last connected by the terminal, so as to page the terminal, or sending, by the core network element, a paging message to an access network controller to which a base station last connected by the terminal belongs, wherein the paging message comprises information of the base station last connected by the terminal and the paging range of the terminal, which is used to give an instruction for paging the terminal in the base station last connected by the terminal; or
if the paging range of the terminal is multiple cells, sending, by the core network element, a paging message to a base station to which a cell last connected by the terminal belongs and a base station to which a neighboring cell of the cell last connected by the terminal belongs, wherein the paging message comprises information of a cell that needs to page the terminal, which is used to give an instruction for paging the terminal in the cell last connected by the terminal and the neighboring cell of the cell last connected by the terminal, or sending, by the core network element, a paging message to an access network controller to which a base station last connected by the terminal belongs, wherein the paging message comprises information of a cell last connected by the terminal and the paging range of the terminal, which is used to give an instruction for paging the terminal in the cell last connected by the terminal and a neighboring cell of the cell last connected by the terminal; or
if the paging range of the terminal is multiple base stations, sending, by the core network element, a paging message to a base station last connected by the terminal and a neighboring base station of the base station last connected by the terminal, so as to page the terminal, or sending, by the core network element, a paging message to an access network controller to which a base station last connected by the terminal belongs, wherein the paging message comprises information of the base station last connected by the terminal and the paging range of the terminal, which is used to give an instruction for paging the terminal in the base station last connected by the terminal and a neighboring base station of the base station last connected by the terminal; or
if the paging range of the terminal is a location area, sending, by the core network element, a paging message to all base stations in a location area to which a base station last connected by the terminal belongs, so as to page the terminal, or sending, by the core network element, a paging message to all access network controllers in a location area to which a base station last connected by the terminal belongs, wherein the paging message comprises information of the location area to which the base station last connected by the terminal belongs and the paging range of the terminal, which is used to give an instruction for paging the terminal in the location area to which the base station last connected by the terminal belongs.

9. A method for paging a terminal, comprising:
receiving, by an access network controller, a paging message sent by a core network element, wherein the paging message comprises a paging range of the terminal and infonnation of a cell last connected by the terminal, or the paging message comprises information of a base station last connected by the terminal and a paging range of the terminal, wherein the paging range comprises: a single cell, a single base station, multiple cells, or multiple base stations; and
paging, by the access network controller, the terminal according to the paging message.

10. The method according to claim 9, wherein
if the paging range of the terminal in the paging message sent by the core network element is a single cell, the paging message sent by the core network element comprises the information of the cell last connected buy the terminal, which is used to give an instruction for paging the terminal in the cell last connected by the terminal; and
the paging, by the access network controller, the terminal according to the paging message specifically is:
determining, by the access network controller, a base station in which the cell last connected by the terminal is located, and sending paging information to the base station in which the cell last connected by the terminal is located to instruct the base station to page the terminal in the cell last connected by the terminal.

11. The method according to claim 9, wherein
if the paging range of the terminal in the paging message sent by the core network element is a single base station, the paging message sent by the core network element comprises the information of the base station last connected by the terminal, which is used to give an instruction for paging the terminal in the base station last connected by the terminal; and
the paging, by the access network controller, the terminal according to the paging message specifically is:
sending, by the access network controller, the paging message to the base station last connected by the terminal to instruct the base station to page the terminal in all cells of the base station.

12. The method according to claim 9, wherein
if the paging range of the terminal in the paging message sent by the core network element is multiple cells, the paging message sent by the core network element comprises the information of the cell last connected by the terminal, which is used to give an instruction for paging the terminal in the cell last connected by the terminal and a neighboring cell of the cell last connected by the terminal; and
the paging, by the access network controller, the terminal according to the paging message specifically is:
determining, by the access network controller, a base station in which the cell last connected by the terminal is located and a base station in which the neighboring cell of the cell last connected by the terminal is located; and
sending, by the access network controller, the paging message to the base station in which the cell last connected by the terminal is located to give an instruction for paging the terminal in the cell last connected by the terminal, and sending the paging message to the base station in which the neighboring cell of the cell last connected by the terminal is located to give an instruction for paging the terminal in the neighboring cell of the cell last connected by the terminal.

13. The method according to claim 9, wherein
if the paging range of the terminal in the paging message sent by the core network element is multiple base stations, the paging message sent by the core network element comprises the information of the base station last connected by the terminal, which is used to give an instruction for paging the terminal in the base station last connected by the terminal and a neighboring base station of the base station last connected by the terminal; and
the paging, by the access network controller, the terminal according to the paging message specifically is:
determining, by the access network controller, the neighboring base station of the base station last connected by the terminal; and
sending, by the access network controller, the paging message to the base station last connected by the terminal to instruct the base station last connected by the terminal to page the terminal, and sending the paging message to the neighboring base station to instruct the neighboring base station to page the terminal.

14. A core network element, comprising:
an obtaining module, configured to obtain mobility information or service information of a terminal;
a paging range determination module, configured to determine a paging range of the terminal according to the mobility information of the terminal and correspondence between the mobility information and the paging range, or determine a paging range of the terminal according to the service information of the terminal and correspondence between the service information and the paging range, wherein the paging range comprises: a single cell, a single base station, multiple cells, multiple base stations, or a location area; and
a paging module, configured to page the terminal according to the paging range of the terminal.

15. The network element according to claim 14, wherein the obtaining module comprises:
a first obtaining unit, configured to receive location information of the terminal sent by a radio access network element connected to the terminal, or when the terminal releases a radio connection to a radio access network element, receive location information of the terminal sent by the radio access network element, wherein the location information comprises information of a cell in which the terminal is located or information of a base station in which the terminal is located; and store the received location information; and
a second obtaining unit, configured to obtain the service information of the terminal.

16. The network element according to claim 14 or 15, wherein the paging range determination module comprises:
a first determination unit, configured to determine the paging range of the terminal according to the mobility information of the terminal and the correspondence between the mobility information and the paging range, wherein the paging range comprises: a single cell, a single base station, multiple cells, multiple base stations, or a location area;
a second determination unit, configured to determine the paging range of the terminal according to the service information of the terminal and the correspondence between the service information and the paging range; and
a third determination unit, configured to determine, according to the service information of the terminal, whether a service characteristic corresponding to the service information is a time delay-insensitive service, if yes, determine the paging range of the terminal through the second determination unit, otherwise, determine the paging range of the terminal through the second determination unit.

17. The network element according to claim 16, wherein the first determination unit is specifically configured to obtain a mobility characteristic of the terminal according to the mobility information of the terminal and correspondence between the mobility information and the mobility characteristic; and obtain the paging range of the terminal according to the mobility characteristic of the terminal and correspondence between the mobility characteristic and the paging range, wherein the correspondence between the mobility information and the paging range comprises the correspondence between the mobility information and the mobility characteristic and the correspondence between the mobility characteristic and the paging range, and the mobility characteristic comprises: a low mobility state, a moderate mobility state, or a high mobility state.

18. The network element according to claim 17, wherein the correspondence between the mobility characteristic and the paging range comprises: if the mobility characteristic is a low mobility state, the paging range is a single cell or a single base station; or if the mobility characteristic is a moderate mobility state, the paging range is multiple cells or multiple base stations; or if the mobility characteristic is a high mobility state, the paging range is a location area.

19. The network element according to claim 14 or 15, wherein the second determination unit is specifically configured to obtain a service characteristic of the terminal according to the service information of the terminal and correspondence between the service information and the service characteristic; and obtain the paging range of the terminal according to the service characteristic of the terminal and correspondence between the service characteristic and the paging range.

20. The network element according to claim 19, wherein the correspondence between the service characteristic and the paging range comprises: if the service characteristic is a time delay-sensitive service, the paging range is a location area.

21. The network element according to any one of claims 14 to 20, wherein the paging module comprises:
a first paging unit, configured to: if the paging range of the terminal is a single cell, send a paging message to a base station last connected by the terminal, wherein the paging message comprises information of a cell last connected by the terminal and the paging range of the terminal, which is used to give an instruction for paging the terminal in the cell last connected by the terminal, or send a paging message to an access network controller to which a base station last connected by the terminal belongs, wherein the paging message comprises information of a cell last connected by the terminal and the paging range of the terminal, which is used to give an instruction for paging the terminal in the cell last connected by the terminal; or
a second paging unit, configured to: if the paging range of the terminal is a single base station, send a paging message to a base station last connected by the terminal, so as to page the terminal, or send a paging message to an access network controller to which a base station last connected by the terminal belongs, wherein the paging message comprises information of the base station last connected by the terminal and the paging range of the terminal, which is used to give an instruction for paging the terminal in the base station last connected by the terminal; or
a third paging unit, configured to: if the paging range of the terminal is multiple cells, send a paging message to a base station to which a cell last connected by the terminal belongs and a base station to which a neighboring cell of the cell last connected by the terminal belongs, wherein the paging message comprises information of a cell that needs to page the terminal, which is used to give an instruction for paging the terminal in the cell last connected by the terminal and the neighboring cell of the cell last connected by the terminal, or send a paging message to an access network controller to which a base station last connected by the terminal belongs, wherein the paging message comprises information of a cell last connected by the terminal and the paging range of the terminal, which is used to give an instruction for paging the terminal in the cell last connected by the terminal and a neighboring cell of the cell last connected by the terminal; or
a fourth paging unit, configured to: if the paging range of the terminal is multiple base stations, send a paging message to a base station last connected by the terminal and a neighboring base station of the base station last connected by the terminal, so as to page the terminal, or send a paging message to an access network controller to which a base station last connected by the terminal belongs, wherein the paging message comprises information of the base station last connected by the terminal and the paging range of the terminal, which is used to give an instruction for paging the terminal in the base station last connected by the terminal and a neighboring base station of the base station last connected by the terminal; or
a fifth paging unit, configured to: if the paging range of the terminal is a location area, send a paging message to all base stations in a location area to which a base station last connected by the terminal belongs, so as to page the terminal, or send a paging message to all access network controllers in a location area to which a base station last connected by the terminal belongs, wherein the paging message comprises information of the location area to which the base station last connected by the terminal belongs and the paging range of the terminal, which is used to give an instruction for paging the terminal in the location area to which the base station last connected by the terminal belongs.

22. An access network controller, comprising:
a receiving module, configured to receive a paging message sent by a core network element, wherein the paging message comprises a paging range of the terminal and information of a cell last connected by the terminal, or the paging message comprises information of a base station last connected by the terminal and a paging range of the terminal, wherein the paging range comprises: a single cell, a single base station, multiple cells, or multiple location areas of base stations; and
a paging module, configured to page the terminal according to the paging message.

23. The controller according to claim 22, wherein the paging module comprises:
a first paging unit, configured to: if the paging range of the terminal in the paging message sent by the core network element is a single cell, determine a base station in which the cell last connected by the terminal in the paging message sent by the core network element is located, and send paging information to the base station in which the cell last connected by the terminal is located to instruct the base station to page the terminal in the cell last connected by the terminal; or
a second paging unit, configured to: if the paging range of the terminal in the paging message sent by the core network element is a single base station, send the paging message to the base station last connected by the terminal in the paging message sent by the core network element to instruct the base station to page the terminal in all cells of the base station; or
a third paging unit, configured to: if the paging range of the terminal in the paging message sent by the core network element is multiple cells, determine a base station in which the cell last connected by the terminal in the paging message sent by the core network element is located and a base station in which a neighboring cell of the cell last connected by the terminal is located, send the paging message to the base station in which the cell last connected by the terminal is located to give an instruction for paging the terminal in the cell last connected by the terminal, and send the paging message to the base station in which the neighboring cell of the cell last connected by the terminal is located to give an instruction for paging the terminal in the neighboring cell of the cell last connected by the terminal; or
a fourth paging unit, configured to: if the paging range of the terminal in the paging message sent by the core network element is multiple base stations, determine a neighboring base station of the base station last connected by the terminal in the paging message sent by the core network element, send the paging message to the base station last connected by the terminal to instruct the base station last connected by the terminal to page the terminal, and send the paging message to the neighboring base station to instruct the neighboring base station to page the terminal.

24. A base station, configured to receive a paging message sent by an access network controller or a core network element and comprising information of a cell last connected by a terminal, and page, according to the paging message, the terminal in the cell last connected by the terminal.

25. A system for paging a terminal, comprising a base station and the core network element according to any one of claims 14 to 21, or comprising a base station, the core network element according to any one of claims 14 to 21, and the access network controller according to claim 22 or 23.
